Europäisches Patentamt

European Patent Office

Office européen des brevets

(11) Numéro de publication: **0 370 911**
**A1**

## (12) DEMANDE DE BREVET EUROPEEN

(21) Numéro de dépôt: 89403237.4

(22) Date de dépôt: 23.11.89

(51) Int. Cl.⁵: **C08L 5/00, C08J 3/03, B01F 17/42**

(30) Priorité: 25.11.88 FR 8815457

(43) Date de publication de la demande:
30.05.90 Bulletin 90/22

(84) Etats contractants désignés:
DE FR GB NL

(71) Demandeur: SOCIETE NATIONALE ELF
AQUITAINE Société anonyme dite
Tour Elf 2, Place de la Coupole La Défense 6
F-92400 Courbevoie(FR)

(72) Inventeur: Truong, Dinh Nguyen
Monceau Park B1-244 22 Av Georges
Pompidou
F-06220 Vallauris(FR)
Inventeur: Gadioux, Jacques
Quartier Magret
F-06430 Orthez(FR)
Inventeur: Sarazin, Dominique
9 rue de Nomeny
F-67100 Strasbourg(FR)

(74) Mandataire: Ohresser, François
Société Nationale Elf Aquitaine Division
Proprieté Industrielle Tour Elf
F-92078 Paris La Défense Cédex 45(FR)

(54) Solutions liquides concentrées de polysaccharides.

(57) L'invention a pour objet de nouvelles solutions liquides concentrées de polysaccharides, caractérisées en ce qu'elles sont préparées par ultrafiltration d'une solution diluée de polymère à laquelle a été ajouté un agent tensioactif.

Les solutions sont notamment utilisables, après dilution, comme agent épaississant des fluides aqueux.

EP 0 370 911 A1

## SOLUTIONS LIQUIDES CONCENTREES DE POLYSACCHARIDES

La présente invention concerne les solutions concentrées liquides de polysaccharides hydrosolubles, leurs procédés d'obtention et leurs utilisations en tant qu'agent viscosifiant des milieux aqueux.

En raison de leurs propriétés fortement épaississantes et de leur rhéologie, les polysaccharides ont trouvé de nombreuses applications industrielles, notamment dans le domaine alimentaire, de la peinture, du papier, du textile, des cosmétiques, du bâtiment, dans le traitement des eaux, dans l'industrie pétrolière, par exemple, dans les boues de forage, les fluides de complétion, de traitement des puits, la récupération améliorée des hydrocarbures ... et plus récemment comme "stabilisants" d'émulsion, tel que les émulsions d'hydrocarbures ou de bitumes ou de suspension.

Pour la plupart de ces applications, il est nécessaire de mettre ces polymères sous fo me d'une solution aqueuse plus ou moins diluée. Bien souvent ces polymères sont, pour des raisons pratiques, sous forme de poudres obtenues par précipitation du polymère à partir de son milieu de fabrication. Il est bien connu que le principal inconvénient des poudres de polymère hydrosoluble est leur difficulté à se dissoudre rapidement et complètement même sous agitation violente. Au contact de l'eau, il se forme une mince pellicule de "gel" gonflé en surface enrobant le grain de polymère et en général il en résulte des "grumeaux" et des amas difficilement dispersables et "insolubles" même avec des temps de dissolution importants. Par ailleurs, la poudre de polymère, avec le type de préparation actuelle (précipitation alcoolique) est la moins économique des formes de conditionnement et pose des problèmes de sécurité en raison des particules fines responsables des nuages de poussière.

Pour tenter de résoudre ces problèmes, il a été proposé des formulations améliorées sous forme de poudre ou de compositions "liquides" à concentrations élevées en matière active. Sous forme de poudre, il a été préconisé une poudre à solubilisation contrôlée par réticulation partielle et réversible par les dialdéhydes, brevet français n° 2 371 462 ; une poudre enrobée d'une couche protectrice d'un produit paraffinique s'éliminant dans l'eau chaude, brevet français n° 2 487 368 ; une poudre additionnée d'un matériau fortement hydrophile tel que la silice brevet français n° 2 516 517 ; une poudre présentant une mouillabilité améliorée après traitement par des tensio-actifs brevet US n° 4 657 086, ou encore sous forme de granulé poreux brevet européen n° 0 254 603. Ces formulations sous forme de poudre, semblent résoudre le problème de la formation d'agrégats lors de leur dissolution, mais laissent subsister celui de la dissolution complète du polymère, qui dépend des caractéristiques propres de la poudre telles que l'état d'hydratation, la cristallinité, les liaisons moléculaires à l'état solide etc...

Il a été également proposé des compositions liquides qui peuvent se présenter soit sous forme de suspensions dans un liquide organique, non solvant du polymère : brevet français n° 2 531 093 et n° 2 540 879, brevets européens n° 00 166 40 et n° 0 039 128, et brevet britannique n° 20797683, soit sous forme d'émulsions brevet français n° 2 548 676. Les formulations sous forme de suspension présentent les mêmes inconvénients que les poudres pour ce qui concerne la dissolution totale qui est dificile. Seules les formulations sous forme d'émulsion se dissolvent rapidement et parfaitement en phase aqueuse. Cependant, dans la majorité des cas, ces formulations "liquides" présentant un défaut important de stabilité entraînant des phénomènes de décantation en cas de stockage prolongé dans des cuves non agitées ou non thermostatées.

Par ailleurs, il a été proposé, pour des applications telles que la récupération améliorée des hydrocarbures, des formulations de polymères de type polysaccharide auxquelles étaient ajoutés des agents tensio-actifs qui amélioraient leurs propriétés dans l'application. On peut citer, à titre d'exemple, le brevet français n° 2 600 336. Il faut cependant observer que les teneurs en polymères et en tensio-actifs de ces formulations sont faibles, de l'ordre de quelques centaines de ppm pour le polymère et quelques milliers de ppm pour les tensio-actifs.

La présente invention permet de remédier à tous ces problèmes en proposant des solutions liquides concentrées en polysaccharide, de teneurs élevées en matière active, présentant des faibles viscosités et des caractéristiques d'écoulement et de mise en oeuvre des liquides, c'est-à-dire :
- des solutions pompables de polymère,
- des solutions de polymère parfaitement dissous et dispersé, prêtes à l'emploi, ne nécessitant pas une dissolution au préalable et rapidement mises en oeuvre par simple dilution.

Par "solutions liquides", on entend les fluides présentant des caractéristiques d'écoulement, c'est-à-dire facilement transportables par des systèmes de pompage industriels classiques.

Les solutions liquides concentrées en polysaccharide sont caractérisées par la présence de tensio-actifs appropriés, à haute teneur.

Les solutions liquides concentrées en polysacharide comprendront de 5 à 40% en poids de polysac-

2

EP 0 370 911 A1

charides et de 2 à 30% en poids de tensio-actifs et de préférence de 10 à 30% en poids de polysaccharide et de 5 à 20% en poids de tensio-actifs.

Il est évident que le choix du tensio-actif et du polysaccharide, ainsi que le rapport pondéral tensio-actif/polysaccharide, sera effectué en fonction de l'application finale envisagée.

De façon générale, ce rapport pondéral sera choisi entre 0,2 et 8 et de préférence entre 0,5 et 5.

Pour constituer les solutions liquides concentrées de l'invention, on choisira des polysaccharides obtenus par biosynthèse, tels que, par exemple, le Scléroglucane, polysaccharide non ionique hydrosoluble obtenu par fermentation sur des substrats d'hydrate de carbone d'un champignon du type Sclerotium Rolfsii (ATCC 15206) ou encore du type Sclerotium Glucanicum ou le Schyzophyllane, polysaccharide de structure analogue synthétisé par le champignon Schyzophyllum commun.

Ces biopolymères sont généralement disponibles sous deux formes, soit sous forme liquide, il s'agit alors généralement du milieu de fermentation qui a été stérilisé et filtré pour éliminer la biomasse, soit sous forme solide, le biopolymère, ayant alors été précipité et séché.

Pour constituer les solutions liquides concentrées de l'invention, on choisira soit un agent tensio-actif anionique, soit un agent tensio-actif neutre, soit un mélange des deux.

L'agent tensio-actif choisi devra présenter un certain caractère lipophile (hydrophobe) se caractérisant par une balance hydrophile - lipophile (BHL) inférieure à 20 et de préférence inférieure à 16.

Le coefficient BHL répond à la formule suivante :

$BHL = 20 (1 - M_0/M)$ dans laquelle $M_0$ est la masse de la fraction organique de la molécule et M sa masse totale.

L'agent ou les agents tensio-actifs seront ajoutés en quantité telle que l'on évite une éventuelle précipitation du polymère.

Comme agent tensio-actif anionique, on peut utiliser par exemple :
- les savons des acides gras tels que les sels de sodium ou de potassium d'acides gras saturés ou insaturés en $C_6$-$C_{24}$ ou de dérivés d'acides aminocarboxyliques comme le N-lauryl sarconisate de sodium,
- les sulfates et produits sulfatés tels que les alcoylsulfates alcalins du type laurysulfate de sodium : les sulfates d'alcools gras polyoxoéthylénés, les sulfates d'alcoylphénols polyoxyéthylénés, les sulfates d'arylalkylphénols polyoxyéthylénés,
- les esters phosphoriques de dérivés oxyéthylénés tels que les phosphates d'alcools gras polyoxyéthylénés, les phosphates d'alcoylphénols polyoxyéthylénés, les phosphates d'arylalkylphénols polyoxyéthylénés,
- les sulfonates alcalins tels que les alcoylsulfonates par exemple les alkylsulfoesters des acides en $C_4$-$C_{30}$ du type dialkylsulfosuccinate de sodium, les alcoylbenzène- sulfonates comme le nonylbenzènesulfonate de sodium et le dodecylbenzène-sulfonate de sodium et le dodecylbenzènesulfonate de sodium, les lignosulfonates.

Comme tensio-actifs neutres, classe préférée de l'invention, on peut envisager :
- les alcoylphénols polyoxyéthylénés comme le nonylphénol polyoxyéthyléné, le dinonylphénol polyoxyéthyléné, le tributylphénol polyoxyéthyléné, le dodecylphénol polyoxyéthyléné,
- les alcools gras et acides gras polyoxyéthylénés et/ou polyoxyéthylénés,
- les alkanolamides d'acides gras polyoxyéthylénés et/ou polyoxyéthylénés,
- les esters de polyols, comme les esters de glycérol ou de propylène glycol des acides gras, des huiles et graisses alimentaires, des mélanges d'acides gras et d'acide acétique et/ou lactique et/ou citrique et/ou tartrique,
- les esters de saccharose tels que les sucro-esters et les sucroglycérides, les esters d'acides gras de sorbitan et leurs dérives polyoxyéthylénés et polyoxyéthylénés comme les esters de polyéthylénéglycol ou de polypropylénéglycol polyoxyéthylénés, les esters de sorbitan polyoxyéthylénés, les esters d'acide tartrique polyoxyéthylénés, les glycérides oléiques polyoxyéthylénés.

Les tensio-actifs trouvés particulièrement intéressants sont les mono, bi et trialcoylphénols polyoxyéthylénés comprenant entre 5 et 20 motifs polyoxyéthylénés.

Les solutions liquides concentrées sont préparées par concentration de solutions diluées de biopolysaccharides telles que celles obtenues à partir du milieu de fermentation convenablement traité par stérilisation et élimination des débris cellulaires. Ces solutions diluées contiennent en général environ 0,5% en poids de biopolymère.

Pour cette dernière méthode de fabrication des solutions de l'invention, il sera particulièrement avantageux de soumettre la solution diluée à une ultrafiltration en présence d'une quantité convenable d'agent tensio-actif. En effet, il a été constaté avec surprise que la présence d'agent tensio-actif d'une part augmentait le débit global de perméat (eau et autres molécules de faible masse moléculaire) au travers de la membrane, mais, d'autre part, si sa concentration était judicieusement choisie, permettait, en abaissant la viscosité du milieu d'un facteur de l'ordre de 100, d'augmenter la quantité de polymère recueilli et donc de

3

multiplier par un facteur 4 le taux de concentration. On utilisera une membrane ayant un seuil de coupure compris entre 20.000 et 100.000 Daltons.

Les solutions de l'invention et leurs procédés de préparation sont illustrés par les exemples suivants, donnés à titre limitatif.

Exemple 1 : Préparation des solutions concentrées de Scléroglucane obtenues par ultrafiltration : rôle du tensio-actif

On prépare les solutions concentrées de Scléroglucane en présence ou non de tensio-actif (Sepawet 5432 - Marque BASF : dinonylphénoloxyéthylénés, BHL : 12) par ultrafiltration.

La technique de l'ultrafiltration est basée sur la sélectivité du passage des molécules par leur taille à travers les pores, de dimension bien déterminée, d'une membrane. On a utilisé une membrane organique de type Amicon YM100 (O = 62mm) ainsi qu'un module d'ultrafiltration de laboratoire à agitation tangentielle (Amicon 8200).

Deux solutions alimentent en continu 2 modules à partir de réservoir sous une pression constante de 2 bars, l'une contenant 0,2% en poids de Scléroglucane (CS11L) servant de témoin, l'autre la même quantité de polymère mais en présence de 0,5% en poids de Sepawet 5432 (BASF). On mesure les débits des perméats de chaque module en fonction du temps et des concentrations finales en polymère et en tensio-actif des solutions concentrées. Les résultats obtenus sont donnés dans le tableau 1 ci-dessous.

Tableau 1

| Caractéristiques | Poids de perméat après 200 heures | Concentrations finales/Temps nécess. | Aspect du concentré |
|---|---|---|---|
| Solutions initiales | | | |
| Filtrat brut à 0,2% de polymère | 280g | 25g/1/555 h | gel solide |
| Filtrat brut à 0,2% de polymère + 0,5% tensio-actif | 550g | 100g/1/460 h | solution visqueuse |

EP 0 370 911 A1

L'intérêt de l'exemple réside également dans le fait que très peu de tensio-actif traverse la membrane utilisée (< 2%) ; il y a reconcentration en même temps du polymère et du tensio-actif au cours de l'opération, l'un tendant à augmenter la viscosité de la solution, l'autre à la diminuer. L'effet global obtenu est une solution visqueuse parfaitement fluide.

Ainsi, en présence de tensio-actif, on a une augmentation significative du débit global du perméat et des teneurs en polymère élevées.

Exemple 2 : Stabilité des conditionnements en fonction du temps

Pour montrer la stabilité dans le temps de ces conditionnements, on a mesuré la viscosité de la solution concentré de l'exemple 1, ayant 10% en poids de polymère et 25% en poids de tensio-actif, à l'instant de la préparation et 38 jours plus tard. Les résultats figurent dans le tableau 2.

Les viscosités des solutions sont mesurées à l'aide d'un rhéomètre de type Rhéomat 30 (Contravès) avec un module spécial adapté aux fortes viscosités (Module MSA/E). Les valeurs sont obtenues à différents taux du cisaillement mécanique exprimé en $S^{-1}$.

Tableau 2

| Cisaillement (S-1) | 0,1 | 1 | 10 | 100 |
|---|---|---|---|---|
| Viscosité (mPa.s) t = 0 | 9.000 | 4.000 | 1.600 | 1.000 |
| t = 38 jours | 10.000 | 4.000 | 1.700 | 1.000 |

Ces résultats montrent que ces solutions sont stables pour des temps de stockage assez prolongés.

Exemple 3 : Solution de Schyzophyllane et de tensio-actif

L'exemple a pour objectif de montrer l'effet de diminution de viscosité d'une solution de schyzophyllane obtenue de manière analogue par ultrafiltration en présence de tensio-actif (concentration en polymère = 1.000 ppm). Les résultats obtenus figurent dans le tableau 3 ci-dessous.

Tableau 3

| Cisaillement ($s^{-1}$) | | 0,1 | 1 | 10 |
|---|---|---|---|---|
| Viscosité (mPa.s) | 0%Tensio-actif | 457 | 210 | 48 |
| | 3%Tensio-actif | 62 | 42 | 27 |

Ainsi, les résultats obtenus pour le Scléroglucane sont tout à fait valables également pour le Schyzophyllane.

**Revendications**

1 - Procédé de préparation de solutions liquides concentrées de polysaccharides caractérisé en ce qu'on soumet une solution diluée de polysaccharides et de tensio-actifs, telle que le rapport pondéral polysaccharides/tensio-actifs est compris entre 0,2 et 8, à une ultrafiltration.

2 - Procédé selon la revendication 1 caractérisé en ce que le rapport pondéral agent tensio-actif/Polysaccharide est compris entre 0,5 et 5.

3 - Procédé selon l'une des revendications 1 et 2 caractérisé en ce que le polysaccharide est choisi parmi le Scléroglucane et le Schyzophyllane.

4 - Procédé selon l'une des revendications 1 à 3 caractérisé en ce que l'agent tensio-actif est choisi parmi les tensio-actifs anioniques ou neutres.

5 - Procédé selon la revendication 4 caractérisé en ce que l'agent tensio-actif présente une BHL inférieure à 20 et de préférence inférieure à 16.

6 - Procédé selon la revendication 5 caractérisé en ce que l'agent tensio-actif est choisi parmi les polyalcoylphénol-polyoxyéthylénés.

7 - Procédé selon l'une des revendications 1 à 6 caractérisé en ce que l'ultrafiltration est réalisée avec une membrane ayant un seuil de coupure compris entre 20 000 et 100 000 Daltons.

# DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | EP-A-0 102 269  (RHONE-POULENC)<br>* Revendications; tableau 2 *<br>--- | 1 | C 08 L   5/00<br>C 08 J   3/03<br>B 01 F   17/42 |
| Y | EP-A-0 069 523  (PFIZER)<br>* Abrégé *<br>--- | 1 | |
| D,A | FR-A-2 600 336  (INSTITUT FRANCAIS DU PETROLE)<br>----- | 1 | |

**DOMAINES TECHNIQUES RECHERCHES (Int. Cl.5)**

C 08 L
C 12 P
C 08 B

Le présent rapport a été établi pour toutes les revendications

| Lieu de la recherche | Date d'achèvement de la recherche | Examinateur |
|---|---|---|
| LA HAYE | 04-01-1990 | SOMERVILLE F.M. |